# EUROPÄISCHE PATENTSCHRIFT

(11) **EP 2 512 697 B1**
(45) Veröffentlichungstag und Bekanntmachung des Hinweises auf die Patenterteilung: **30.05.2018**
(21) Anmeldenummer: 10795321.8
(22) Anmeldetag: 15.12.2010
(51) Int. Cl.: B08B 5/04, B25J 11/00, B25J 15/00, B25J 17/02, C09J 5/00

(54) **VERFAHREN ZUM ENTFERNEN VON ÜBERSCHÜSSIGEM KLEBSTOFF**
METHOD FOR REMOVING EXCESS ADHESIVE
PROCÉDÉ D'ENLÈVEMENT D'ADHÉSIF SUPERFLU

(30) Priorität: 15.12.2009 DE 102009058337; 22.06.2010 DE 102010024591
(43) Veröffentlichungstag der Anmeldung: 24.10.2012
(73) Patentinhaber: Eftec Europe Holding AG, 6301 Zug (CH)
(72) Erfinder: STRAUSS, Kurt, 72218 Wildberg (DE); SCHWEINFURTH, Michael, 71292 Friolzheim (DE); MÜLLER, Martin, 88048 Friedrichshafen (DE); WANNER, Reiner, 88690 Uhldingen-Mühlhofen (DE)
(74) Vertreter: Hepp Wenger Ryffel AG
(86) Internationale Anmeldenummer: PCT/EP2010/069818
(87) Internationale Veröffentlichungsnummer: WO 2011/083012

(56) Entgegenhaltungen:
- EP-A1- 1 977 836
- WO-A1-2010/075894

## Beschreibung

Die Erfindung betrifft ein Verfahren zum Entfernen von überschüssigem Klebstoff beim Verbinden zweier Bauteile nach dem Oberbegriff von Patentanspruch 1.

Bei der Fertigung von Türen, Klappen oder dergleichen für Kraftwagen wird ein Außenteil mit einem Innenteil der jeweiligen Tür oder Klappe verklebt, wobei in der Regel das Außenteil um das Innenteil gefalzt wird. Im Verbindungsbereich - hier also im Falzbereich - der beiden Bauteile wird ein Überschuss eines Klebstoffs in Form einer viskosen oder pastösen Masse eingebracht, damit der Verbindungsbereich nach dem Falzen sicher mit Klebstoff gefüllt ist. Überschüssiger Kleber quillt nach dem Verbinden aus dem Verbindungsbereich heraus und muss vor der Weiterverarbeitung der Tür, Klappe oder dergleichen aus verschiedenen Gründen, beispielsweise aus Gründen der Optik, der Funktion oder Toleranzgründen, wieder entfernt werden. Zudem kann es passieren, dass der überschüssige Klebstoff in nachfolgenden Prozessen abfallen oder abgewaschen werden und so zu Verschmutzungen von Oberflächen oder Anlagen führen kann. Die Entfernung des überschüssigen Klebstoffes erfolgt üblicherweise in Handarbeit mittels eines Spachtels. Aufgrund der hohen Taktraten an solchen Fertigungsbändern müssen hierzu oftmals mehrere Arbeiter pro Werkstück eingesetzt werden. Weiterhin erfordern evtl. aus dem Klebstoff ausgasende Lösemitteldämpfe aufwendige Absaugungen und dergleichen. Das Dokument des Stands der Technik EP1 977 836 A1 offenbart ein Verfahren zur Entfernung von überschüssigem Klebstoff beim Verbinden zweier Bauteile durch Falzung und Klebung, wobei der Klebstoff auf wenigstens ein Bauteil aufgetragen wird, die Bauteile durch Falzung miteinander verbunden werden und überschüssiger Klebstoff nach dem Verbinden durch eine Absaugeinrichtung aufgenommen wird. Diese Absaugeinrichtung befindet sich bevorzugt an einem Roboter und arbeitet mit Unterdruck. Der vorliegenden Erfindung liegt daher die Aufgabe zugrunde, ein Verfahren nach dem Oberbegriff von Patentanspruch 1 so weiterzuentwickeln, dass eine schnelle und einfache Entfernung von überschüssigem Klebstoff ermöglicht wird. Diese Aufgabe wird durch ein Verfahren mit den Merkmalen des Patentanspruchs 1 gelöst.

Ein solches Verfahren zum Verbinden zweier Bauteile, insbesondere eines Innenteils und Außenteils einer Tür, Klappe oder dergleichen für einen Kraftwagen, umfasst das Auftragen eines Klebstoffs auf einen Verbindungsbereich wenigstens eines der Bauteile, wonach die Bauteile im Verbindungsbereich miteinander verbunden werden. Im Falle von Türen kann es sich beispielsweise um zwei Blechbauteile handeln, wobei das Außenteil der Tür um den Verbindungsbereich gefalzt wird.

Erfindungsgemäß ist vorgesehen, dass nach dem Verbinden der beiden Bauteile überschüssiger Klebstoff mittels einer Saugvorrichtung entfernt wird. Dies ermöglicht ein besonders schnelles und gründliches Entfernen von überschüssigem Klebstoff, sodass die Klebstoffentfernung verglichen mit konventionellen Verfahren, beispielsweise dem Einsatz von Spachteln, beschleunigt wird.

Vorzugsweise wird die Saugvorrichtung mittels eines Roboters entlang des Verbindungsbereichs geführt. Auf den Einsatz menschlicher Arbeitskräfte kann daher vollkommen verzichtet werden, wodurch eine besonders kostengünstige Durchführung des Verfahrens ermöglicht wird.

Alternativ kann die Saugvorrichtung stationär angeordnet sein, während die Bauteile durch einen Roboter mit ihrem Verbindungsbereich an der Saugvorrichtung entlang geführt werden. Dies kann je nach Ausgestaltung der Fügelinie Vorteile im Hinblick auf Prozessführung oder Platzbedarf bieten.

In weiterer Ausgestaltung der Erfindung ist die Saugvorrichtung über ein Toleranzausgleichselement mit einem Arm des Roboters oder im stationären Falle mit ihrer stationären Anbindung verbunden. Hierbei kann es sich beispielsweise um Federelemente oder dergleichen handeln. Damit kann ein zuverlässiges Entfernen von überschüssigem Klebstoff auch bei Toleranzschwankungen realisiert werden. Gleichzeitig ermöglicht ein solches Toleranzausgleichselement eine besonders einfache Programmierung von Bahnkurven und dergleichen des Roboters, da lediglich angenäherte Bahnkurven programmiert werden müssen, wobei noch immer eine genaue Positionierung der Saugvorrichtung durch das Toleranzausgleichselement erzielt wird.

Die Saugvorrichtung erzeugt bevorzugt einen Unterdruck, sodass eine gute Entfernung des Klebstoffs sichergestellt werden kann. Alternativ oder zusätzlich kann die Saugvorrichtung mit Mitteln zum Erzeugen eines Unterdrucks verbunden sein, insbesondere mittels eines Absaugschlauches und/oder eines Absaugrohres der Saugvorrichtung. Der Absaugschlauch und/oder das Absaugrohr kann mit einem Sammelbehälter verbunden sein. Der überschüssige Klebstoff kann dann durch den Absaugschlauch und/oder das Absaugrohr hindurch in den Sammelbehälter geführt werden kann. Der Sammelbehälter kann von einer Saugdüse der Saugvorrichtung, mit der der Klebstoff abgesaugt wird, beabstandet sein. Beispielsweise kann der Sammelbehälter im Abstand von einigen Metern von der Saugdüse angeordnet sein. Der Sammelbehälter muss dann nicht zusammen mit der Saugdüse bewegt werden, sondern kann während des gesamten Absaugvorganges an einem festen Ort verbleiben.

Die Entfernung des Klebstoffs kann weiter verbessert werden, indem vor dem Absaugen und/oder während des Absaugens des Klebstoffs der Klebstoff mit einem Antihaftmittel, insbesondere mit einer geeigneten benetzenden Flüssigkeit, beispielsweise mit Öl und/oder einem geeigneten Weichmacher, benetzt wird. Geeignete Antihaftmittel sind insbesondere Öle (vorzugsweise Silikonöle), Ölemulsionen in Wasser, Fetten und/oder Harzen, Wachse (insbesondere natürliche und/oder synthetische Paraffine mit und/oder ohne funktionelle Gruppen), Metallseifen (insbesondere MetallSalze von Fettsäuren, wie etwa Calcium-, Blei-, Magnesium-, Aluminium-, Zinkstearat), Fette, Polymere (insbesondere Polyvinylalkohole, Polyester und/oder Polyolefine), Fluorkohlenstoffe oder beliebige Mischungen davon. Das Antihaftmittel kann alternativ oder zusätzlich auch ein geeignetes Pulver enthalten oder daraus bestehen, beispielsweise Talkum, Graphit, Glimmer oder Mischungen davon. Dies verbessert die Fließfähigkeit des Klebstoffs und verhindert ein Anhaften des Klebstoffs an Teilen der Saugvorrichtung, beispielsweise an einer Saugdüse und/oder einem Absaugschlauch und/oder einem Absaugrohr der Saugvorrichtung.

Wenn der Klebstoff vor dem Absaugen mit dem Antihaftmittel behandelt wird, so wird nur die Oberfläche des Klebstoffes benetzt, beispielsweise die Oberfläche einer aufgetragenen Klebstoffraupe. Durch das Absaugen kann dieser Klebstoff in einzelne Stücke zerrissen werden, wodurch neue, nicht mit dem Antihaftmittel benetzte Oberflächen entstehen. Es besteht dann die Gefahr, dass der Klebstoff mit diesen neu entstandenen Oberflächen beispielsweise an einer Saugdüse, einem Absaugschlauch oder einem Absaugrohr der Saugvorrichtung anhaftet.

Um dies zu verhindern, ist es besonders vorteilhaft, wenn das Antihaftmittel, insbesondere das Öl, direkt in die Saugvorrichtung, insbesondere in eine Saugdüse der Saugvorrichtung, eingeleitet wird, insbesondere eingesprüht wird. Hierdurch können auch die durch das Absaugen entstandenen neuen Oberflächen des Klebstoffes mit dem Antihaftmittel benetzt werden, wodurch Anhaftungen noch wirkungsvoller verhindert werden können.

Weiterhin kann zumindest ein Teil der Oberfläche, insbesondere die gesamte Oberfläche, der Saugvorrichtung, die mit dem abgesaugten Klebstoff in Kontakt gerät oder geraten kann, mit einer Antihaftbeschichtung versehen sein, die beispielsweise Teflon enthalten oder daraus bestehen kann. So kann etwa die innere Oberfläche einer Saugdüse und/oder eines Absaugschlauches und/oder eines Absaugrohres ganz oder teilweise mit einer solchen Antihaftbeschichtung versehen sein. Auf diese Weise kann ebenfalls ein Anhaften des Klebstoffes an diesen Flächen verhindert werden.

Während des Absaugens kann die Saugvorrichtung, insbesondere eine Saugdüse der Saugvorrichtung, zumindest bereichsweise an einem der Bauteile anliegen. Damit wird sichergestellt, dass im Nahbereich des abzusaugenden Klebstoffs eine hinreichend große Luftströmung über die Bauteiloberfläche erzeugt wird, sodass der Klebstoff zuverlässig entfernt werden kann. Die Anlage der Saugvorrichtung wird erfindungsgemäß an einem der Bauteile über ein Führungselement realisiert. Dieses Führungselement kann vorteilhafterweise als Führungsstift ausgebildet sein. Mittels eines solchen Führungsstifts kann der Abstand zwischen der Saugvorrichtung und dem überschüssigen Klebstoff besonders genau eingestellt werden.

Besonders zweckmäßig ist es, wenn der Führungsstift während des Absaugens an beiden Bauteilen anliegt. Im Fall von überlappenden Bauteilen kann die Saugvorrichtung so mittels des Führungsstiftes besonders präzise entlang der Klebenaht geführt werden. Der Führungsstift liegt dabei an einer Oberfläche des ersten Bauteils und an einer Kante des zweiten Bauteils an.

Ein derartiger Führungsstift kann zudem die Entfernung des überschüssigen Klebstoffs mechanisch unterstützen. Bei der Bewegung der Saugvorrichtung ist es vorteilhaft, wenn der Führungsstift den überschüssigen Klebstoff mechanisch von der Oberfläche der Bauteile abhebt, um so das Absaugen zu unterstützen.

In einer weiteren bevorzugten Ausführungsform der Erfindung wird während des Absaugens über eine Druckluftdüse zusätzlich Druckluft in den Verbindungsbereich der beiden Bauteile geleitet. Durch die Druckluftzufuhr kann der überschüssige Klebstoff ebenfalls von der Oberfläche der Bauteile abgehoben und in Richtung der Saugvorrichtung gefördert werden. Zudem verhindert die Druckluft das Absetzen bereits abgehobenen Materials. Besonders zweckmäßig ist der Einsatz von Druckluft in Verbindung mit dem Abheben des Klebstoffs durch einen Führungsstift. Hierdurch wird eine besonders gründliche Entfernung des Klebstoffs erzielt.

Im Folgenden soll die Erfindung und ihre Ausführungsformen anhand der Zeichnungen näher erläutert werden. Hierbei zeigen:
- Fig. 1A - C: schematische Darstellungen dreier Auftragsmöglichkeiten von Klebstoff zum Verbinden zweier Bauteile;
- Fig. 2: eine perspektivische Ansicht eines Roboters zum Durchführen einer Variante eines erfindungsgemäßen Verfahrens;
- Fig. 3A - D: schematische Schnittdarstellungen zur Veranschaulichung möglicher Klebenahtgeometrien, die mit Varianten des erfindungsgemäßen Verfahrens erzeugbar sind;
- Fig. 4: eine perspektivische Ansicht einer Saugdüse zur Verwendung bei einem erfindungsgemäßen Verfahren;
- Fig. 5: einen Kopfbereich der Saugdüse gemäß Fig. 4 in einer Vorderansicht und
- Fig. 6: den Kopfbereich der Saugdüse gemäß Fig. 4 in Seitenansicht.

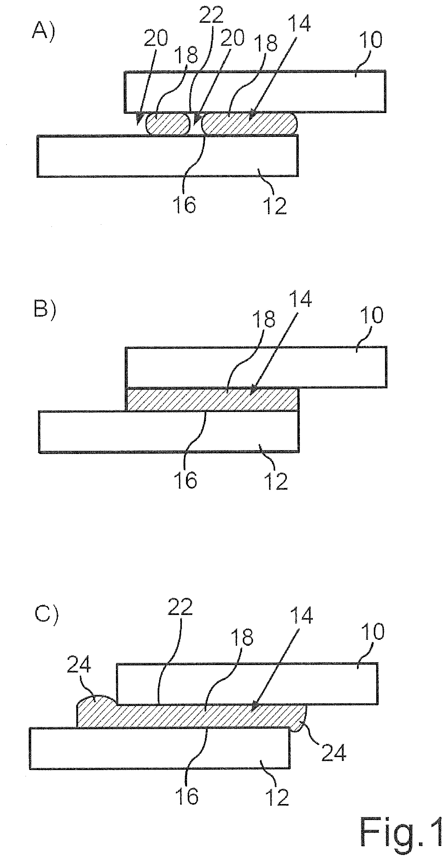

Um zwei Bauteile 10, 12 zu verbinden, wird zunächst in einem Verbindungsbereich 14 auf die Oberfläche 16 eines Bauteils ein Klebstoff 18 aufgebracht, woraufhin die Bauteile 10, 12 aneinander angepresst werden. Der Klebstoff 18 kann ein Ein- oder Mehrkomponentenklebstoff sein. Wird, wie in Fig. 1A dargestellt, zu wenig Klebstoff 18 aufgetragen, so resultieren Hohlräume 20 im Verbindungsbereich 14, die nicht von Klebstoff ausgefüllt sind, und in denen daher die Oberflächen 16, 22 der Bauteile 10, 12 freiliegen.

Idealerweise wird daher, wie in Fig. 1B dargestellt, die Klebstoffmenge so gewählt, dass der Klebstoff 18 den Verbindungsbereich 14 der Bauteile 10, 12 vollständig ausfüllt. Dies ist praktisch jedoch kaum zu realisieren, da abhängig vom Anpressdruck der Bauteile 10, 12 gegeneinander während des Verbindens die benötigte Klebstoffmenge variiert.

In der Praxis wird daher, wie in Fig. 1C gezeigt, üblicherweise zu viel Klebstoff 18 aufgetragen. Der Klebstoff 18 füllt den Verbindungsbereich 14 vollständig aus und benetzt die Oberflächen 16, 22 der Bauteile 10, 12 im Verbindungsbereich 14 vollständig. Aufgrund des Klebstoffüberschusses wird der Klebstoff 18 beim Verbinden der Bauteile 10, 12 aus dem Verbindungsbereich 14 ausgepresst und bildet seitlich des Verbindungsbereichs 14 Klebstoffwülste 24 aus. Diese müssen ggf. vor dem weiteren Bearbeiten des Bauteilverbundes aus den Bauteilen 10, 12 wieder entfernt werden. Dies geschieht üblicherweise manuell mittels Spachteln, was zu einem hohen Herstellungsaufwand führt.

Von besonderer Bedeutung ist ein exakter Klebstoffauftrag, insbesondere bei Türen, Klappen oder dergleichen von Kraftfahrzeugen, wo die Bauteile 10, 12 nicht nur überlappend angeordnet werden, sondern eines der Bauteile 10, 12 um das jeweils andere umgefalzt wird. Durch den Auftrag einer hinreichenden Klebstoffmenge wird dabei sichergestellt, dass keine Feuchtigkeit in den zwischen den Bauteilen 10, 12 gebildeten Zwischenraum eindringen kann. Gerade bei Türen, Klappen oder dergleichen für Kraftwagen ist ein besonders sorgfältiges Entfernen des überschüssigen Klebstoffes 18 in den Verbindungsbereichen 14 von besonderer Bedeutung, da die Klebstoffwülste 24 das optische Erscheinungsbild stark beeinträchtigen. Zudem kann es passieren, dass diese Klebstoffwülste 24 in nachfolgenden Prozessen abfallen oder abgewaschen werden und so zu Verschmutzungen von Oberflächen oder Anlagen führen können.

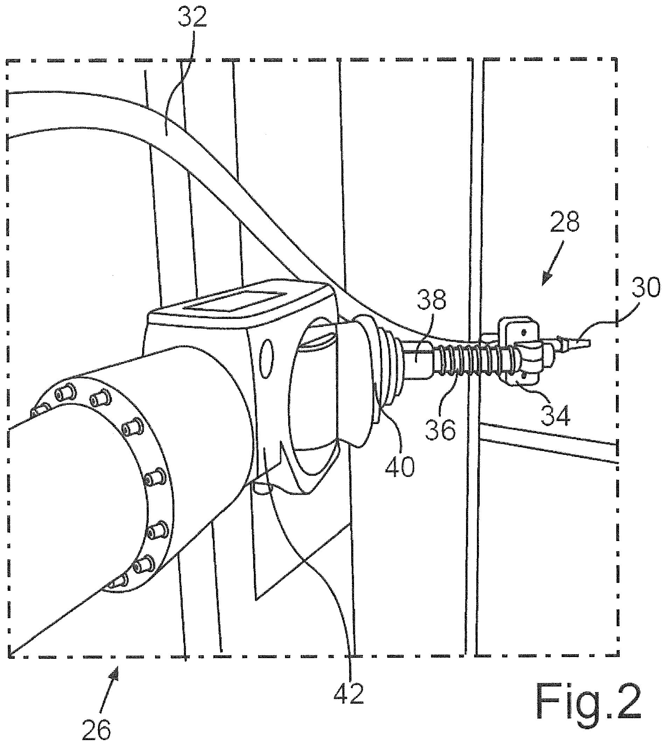

Um überschüssigen Klebstoff 18 schnell und zuverlässig zu entfernen, wird im Rahmen einer Variante eines erfindungsgemäßen Verfahrens ein in Fig. 2 dargestellter, im Ganzen mit 26 bezeichneter Roboter verwendet. Es handelt sich hierbei um einen üblichen Industrieroboter, der an seinem Manipulatorarm 28 eine Saugdüse 30 trägt, an welcher im Betrieb ein Unterdruck angelegt wird. Die Saugdüse 30, die Teil einer Saugvorrichtung ist, wird entlang einer Oberfläche 16, 22 eines der Bauteile 10, 12 seitlich des Verbindungsbereichs 14 entlang geführt, sodass durch den erzeugten Unterdruck die Klebstoffwülste 24 abgesaugt werden können. Der überschüssige Klebstoff 24 wird durch einen Absaugschlauch 32 zu einem Sammelbehälter geführt und kann in der Folge umweltschonend entsorgt werden. Dieser in der Zeichnung nicht dargestellte Sammelbehälter kann vom Arbeitsbereich des Industrieroboters und damit von der Saugdüse 30 beabstandet sein, beispielsweise im Abstand von einigen Metern. Der Absaugschlauch 32 kann hierfür eine entsprechende Länge aufweisen.

In einer alternativen Ausgestaltung der Erfindung wird die Saugdüse 30 stationär angebunden. Dies geschieht beispielsweise über ein Stativ, an dem sie aufgehängt wird. Dann werden die Bauteile 10, 12 durch einen Roboter 26 mit ihrem Verbindungsbereich 14 entlang der Saugdüse 30 geführt.

Um ein Zusetzen von Düse 30 oder Absaugschlauch 32 durch Klebstoffablagerungen zu verhindern, werden diese kontinuierlich oder in zeitlichen Abständen mit einem Antihaftmittel benetzt bzw. gereinigt. Die Saugdüse 30 ist an einem Halter 34 aufgenommen, welcher wiederum durch ein Federelement 36 mit einer Achse 38 des Roboters 26 verbunden ist. Die Achse 38 ist über ein Gelenk 40 mit einem Arm 42 des Roboters verbunden und kann im Zusammenwirken mit den weiteren, in der Figur nicht dargestellten Achsen des Roboters 26 in allen Freiheitsgraden bewegt werden. Das Federelement 36 dient dem Toleranzausgleich, sodass während des Führens der Saugdüse 30 durch den Roboter 26 lediglich sichergestellt werden muss, dass die Saugdüse 30 an einer Oberfläche 16, 22 der Bauteile 10, 12 anliegt. Geringfügige Toleranzen werden durch das Federelement 36 ausgeglichen, welches zudem die Programmierung von Bahnänderungen beispielsweise an Kurven oder Ecken der Bauteile 10, 12 erleichtert.

Im alternativen Falle, in dem die Bauteile 10, 12 durch den Roboter 26 bewegt werden, ist die Saugdüse 30 entsprechend über das Federelement 36 an ihrer stationären Anbindung, also beispielsweise dem Stativ gehalten.

Der Roboter 26 kann zusätzlich eine weitere Düse umfassen, über welche die Klebstoffwülste 24 mit einer geeigneten Flüssigkeit benetzt werden, was die Entfernung des überschüssigen Klebstoffs 18 erleichtert. Zudem kann eine zusätzliche Sensorik vorgesehen werden, durch welche die genaue Lage der Klebstoffwülste 24 erfasst wird, sodass diese durch den Roboter 26 besonders exakt verfolgt werden können. Das Absaugen des überschüssigen Klebstoffs 18 erfolgt zeitnah hinter einer Bearbeitungsstation, in welcher die Bauteile 10, 12 verklebt werden, da ein übermäßiges Aushärten des Klebstoffs 18 vor dem Absaugen des überschüssigen Klebstoffs 18 vermieden werden muss.

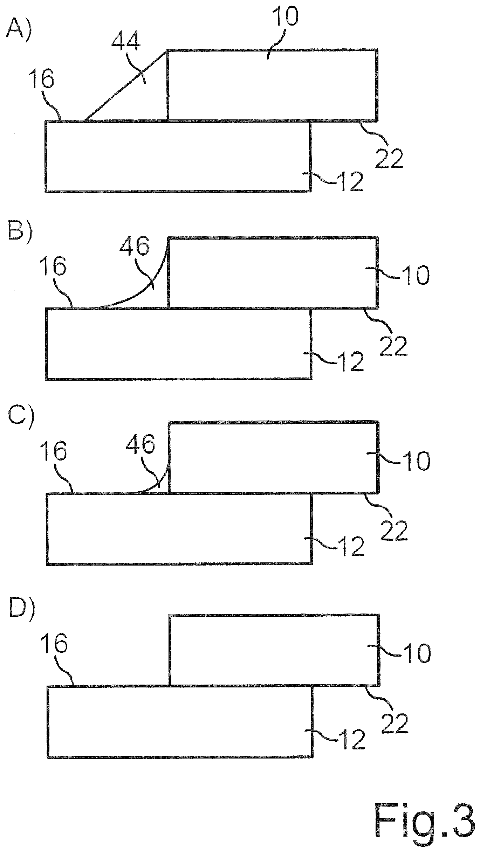

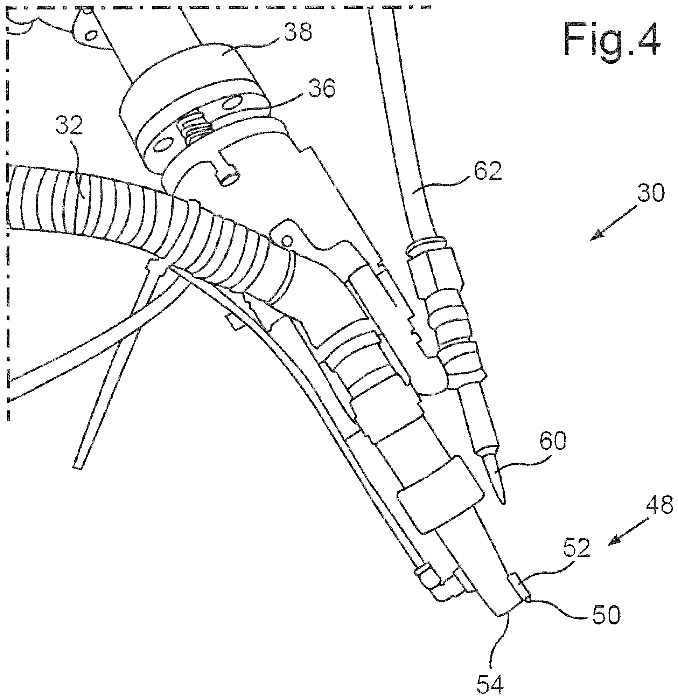

Die Saugdüse 30 kann unterschiedliche Geometrien aufweisen, um so unterschiedliche Klebenahtgeometrien zu realisieren. Beispiele solcher Klebenähte sind in den Fig. 3A - D dargestellt. Düsen mit glatten Kanten können beispielsweise wie in Fig. 3A dargestellt im Querschnitt dreiecksförmige Nähte 44 erzeugen. Durch oval gestaltete Düsen können, wie in den Fig. 4B und 4C gezeigt, parabolische Nähte erzeugt werden, die sich entweder über die gesamte Querschnittshöhe eines der Bauteile 10, 12 erstrecken können, oder auch bei stärkerer Absaugung deutlich unter dieser Höhe bleiben können. Schließlich ist, wie in Fig. 3D gezeigt, ein vollständiges Absaugen des Klebstoffes möglich, was insbesondere in Bereichen notwendig ist, an die besonders hohe optische Ansprüche gestellt werden. Zusätzlich zu den beschriebenen Düsenvarianten kann es auch vorteilhaft sein, die vorauseilende Kante der Düsenöffnung als eine Schnittkante auszuführen, die eine zusätzliche abschabende Wirkung hat.

Eine detaillierte Darstellung der Saugdüse 30 findet sich in den Figuren 4 bis 6. In einem Kopfbereich 48 der Saugdüse 30 ist ein Führungsstift 50 vorgesehen, welcher in einer Halterung 52 aufgenommen ist und über eine Vorderkante 54 der Saugdüse 30 hinausragt. Bei der Benutzung der Saugdüse 30 liegt der Führungsstift 50 an den beiden Bauteilen 10, 12 an. Der Führungsstift 50 gleitet dabei entlang der Oberfläche des Bauteils 12 und wird durch die Kante des Bauteils 10 geführt. Durch das Federelement 38 werden Toleranzen ausgeglichen, so dass eine genaue Führung der Saugdüse 30 möglich ist. Durch jeweilige Einstellung der Federhärte des Federelements 38 kann zudem die Kraft, welche der Führungsstift 50 auf die Bauteile 10, 12 ausübt, begrenzt werden, so dass Beschädigungen der Bauteiloberflächen vermieden werden. Alternativ oder ergänzend zur Führung durch den Führungsstift 50 können auch optische Mittel zum Führen der Saugdüse 30 verwendet werden.

Neben der Führungsfunktion unterstützt der Führungsstift 50 auch die Entfernung des überschüssigen Klebstoffs 24, indem er in den Klebstoff 24 eintaucht und diesen von den Bauteilen 10, 12 abhebt. Das Absaugen des Klebstoffs durch die Saugdüse 30 wird hierdurch erleichtert.

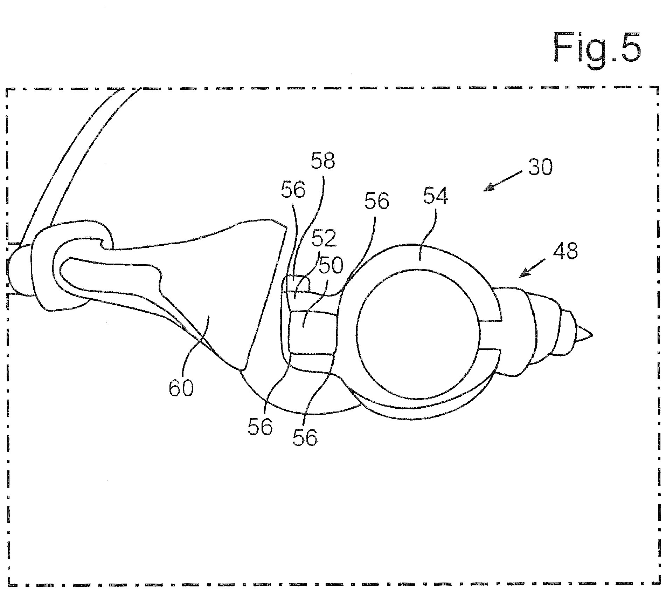

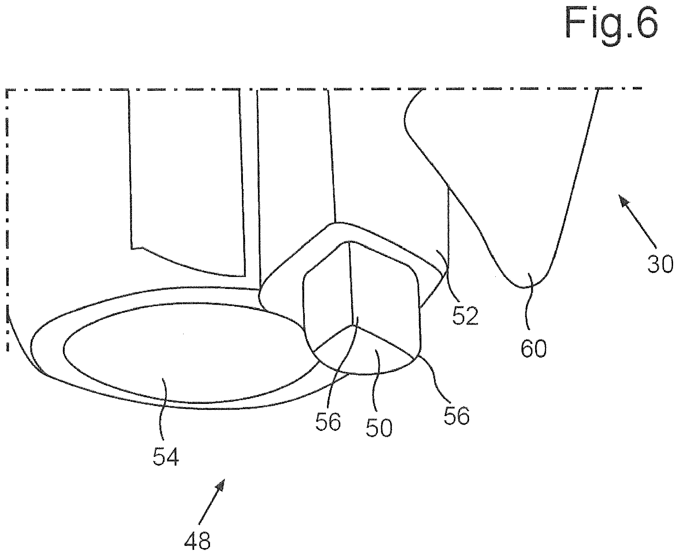

Wie Figuren 5 und 6 zeigen, besitzt der Führungsstift 50 einen rechteckigen Querschnitt, die Kanten 56 sind jedoch abgerundet, um ein spanendes Abtragen von Material der Bauteile 10, 12 selbst zu unterbinden. Dies ist insbesondere bei beschichteten, beispielsweise verzinkten, Bauteilen 10, 12 von Bedeutung. Der Führungsstift 50 kann dabei aus einem harten, verschleißarmen Material wie beispielsweise einem hochfesten Stahl oder einer Keramik bestehen, um besonders hohe Standzeiten zu ermöglichen. Ein solcher Führungsstift 50 kann, wie gezeigt, mittels einer Klemmschraube 58 an der Saugdüse 30 befestigt werden, so dass er im Verschleißfall einfach austauschbar ist. Alternativ kann auch ein weiches Material gewählt werden und Verschleiß bewusst zugelassen werden, um die Oberflächen der Bauteile 10, 12 zu schonen. Ein solcher Führungsstift 50 kann dann beispielsweise als Endlosmaterial von einer Rolle zugeführt werden.

Die Saugdüse 30 weist in den Ausführungsformen gemäß den Figuren 4 bis 6 zusätzlich noch eine Druckluftdüse 60 auf, über welche Druckluft in den Absaugbereich geführt werden kann. Die Druckluft unterstützt das Abheben des überschüssigen Klebstoffs durch den Führungsstift 50 und verhindert das Absetzen bereits abgehobenen Materials. Der Druck der über den Absaugschlauch 62 zugeführten Druckluft muss dabei an den Absaugdruck angepasst werden, so dass abgehobener Klebstoff nicht an der Saugdüse 30 vorbei geblasen wird.

Das geschilderte Verfahren eignet sich zum Entfernen von Klebstoffen von nahezu beliebigen Materialien, wie beispielsweise Stahl oder Aluminium. Bei Bauteilen mit besonders hoher Haftung zwischen Klebstoff und Oberfläche muss allerdings der Nahtbereich gegebenenfalls vor dem Verkleben der Bauteile lokal benetzt werden, um eine spätere Entfernung des überschüssigen Klebstoffs zu ermöglichen.

Es kann je nach Anwendungsfall günstig sein, das erfindungsgemäße Verfahren mit einem alternativen Verfahren zur Entfernung des Klebstoffes zu kombinieren oder zu ergänzen. Als besonders gut geeignet haben sich dabei folgende Verfahren erwiesen: Das Entfernen des Klebstoffes mit Hilfe eines Schabers, welcher eine Schnittkante aufweist, eine vor- oder nachgeschaltete CO₂-Reinigung oder eine Laser-Reinigung der Bereiche, in denen überflüssiger Klebstoff ausgetreten ist, ein Bestrahlen der entsprechenden Bereiche oder zusätzlich an der Vorrichtung angeordnete Bürsten. Durch eine oder mehrerer dieser Verfahren in Kombination mit dem erfindungsgemäßen Verfahren kann eine erhöhte Zuverlässigkeit und Vollständigkeit bei der Entfernung der Klebstoff-Rückstände erreicht werden. Die alternativ beschriebenen Verfahren können auch als jeweils eigenständige Lösungen eingesetzt werden.

## Patentansprüche

1. Verfahren zum Entfernen von überschüssigem Klebstoff beim Verbinden zweier Bauteile (10, 12), bei welchem ein Klebstoff (18) auf einen Verbindungsbereich (14) wenigstens eines der Bauteile (10, 12) aufgetragen wird und die Bauteile (10, 12) im Verbindungsbereich (14) verbunden werden, wobei
nach dem Verbinden überschüssiger Klebstoff (24) mittels einer Saugvorrichtung (30,32) entfernt wird,
**dadurch gekennzeichnet, dass**
während des Absaugens die Saugvorrichtung (30,32) mit einem Führungselement (50) zumindest bereichsweise an einem der Bauteile (10, 12) anliegt.

2. Verfahren nach Anspruch 1,
**dadurch gekennzeichnet, dass**
das Führungselement (50) ein Führungsstift (50) ist.

3. Verfahren nach Anspruch 1 oder 2,
**dadurch gekennzeichnet, dass**
die Saugvorrichtung (30,32) mittels eines Roboters (26) entlang des Verbindungsbereichs (14) geführt wird.

4. Verfahren nach Anspruch 1 oder 2,
**dadurch gekennzeichnet, dass**
die Bauteile (10,12) mittels eines Roboters (26) mit ihrem Verbindungsbereich (14) an der stationär angebundenen Saugvorrichtung (30,32) entlang geführt werden.

5. Verfahren nach Anspruch 3 oder 4,
**dadurch gekennzeichnet, dass**
die Saugvorrichtung (30,32) über ein Toleranzausgleichselement (36) mit einem Arm (42) des Roboters (26) oder mit ihrer stationären Anbindung gehalten wird.

6. Verfahren nach einem der Ansprüche 1 bis 5,
**dadurch gekennzeichnet, dass**
die Saugvorrichtung (30,32) einen Unterdruck erzeugt und/oder mit Mitteln zum Erzeugen eines Unterdrucks verbunden ist.

7. Verfahren nach Anspruch 6,
**dadurch gekennzeichnet, dass**
der überschüssige Klebstoff durch einen Absaugschlauch (32) und/oder ein Absaugrohr hindurch in einen Sammelbehälter geführt wird, welcher mit dem Absaugschlauch und/oder dem Absaugrohr verbunden ist.

8. Verfahren nach einem der Ansprüche 1 bis 7,
**dadurch gekennzeichnet, dass**
vor dem Absaugen und/oder während des Absaugens des Klebstoffes (24) der Klebstoff (24) mit einem Antihaftmittel benetzt wird.

9. Verfahren nach Anspruch 8,
**dadurch gekennzeichnet, dass**
das Antihaftmittel ausgewählt ist aus der Gruppe, die besteht aus:
- Ölen,
- geeigneten Weichmachern,
- Ölemulsionen in Wasser, Fetten und/oder Harzen,
- Wachsen,
- Metallseifen,
- Fetten,
- Polymeren,
- Fluorkohlenstoffen,
- Pulvern,
- beliebigen Mischungen davon.

10. Verfahren nach einem der Ansprüche 8 und 9,
**dadurch gekennzeichnet, dass**
das Antihaftmittel direkt in die Saugvorrichtung (30,32) eingeleitet wird.

11. Verfahren nach einem der Ansprüche 1 bis 10,
**dadurch gekennzeichnet, dass**
zumindest ein Teil der Oberfläche der Saugvorrichtung (30,32), die mit dem abgesaugten Klebstoff in Kontakt gerät oder geraten kann, mit einer Antihaftbeschichtung versehen ist.

12. Verfahren nach Anspruch 11,
**dadurch gekennzeichnet, dass**
die Antihaftbeschichtung Teflon enthält oder daraus besteht.

13. Verfahren nach einem der Ansprüche 1 bis 12,
**dadurch gekennzeichnet, dass**
der überschüssige Klebstoff (24) mittels des Führungselementes zumindest teilweise von einer Oberfläche wenigstens eines der Bauteile (10, 12) abgehoben wird.

14. Verfahren nach einem der Ansprüche 1 bis 13,
**dadurch gekennzeichnet, dass**
während des Absaugens mittels einer Druckluftdüse (60) Druckluft in den Verbindungsbereich (14) der beiden Bauteile (10, 12) geleitet wird.

## Claims

1. A method for removing excess adhesive when bonding two components (10, 12), in which method an adhesive (18) is applied to a bonding region (14) of at least one of the components (10, 12) and the components (10, 12) are bonded in the bonding region (14),
wherein
excess adhesive (24) is removed by means of a suction device (30, 32) after bonding,
**characterised in that**
as the excess adhesive is being sucked away, the suction device (30, 32) bears at least in regions against one of the components (10, 12) by means of a guide element (50).

2. The method according to claim 1,
**characterised in that**
the guide element (50) is a guide pin (50).

3. The method according to claim 1 or 2,
**characterised in that** the suction device (30, 32) is guided along the bonding region (14) by means of a robot (26).

4. The method according to claim 1 or 2,
**characterised in that**
the components (10, 12) are guided by means of a robot (26) with their bonding region (14) along the suction device (30, 32), which is attached in a stationary manner.

5. The method according to claim 3 or 4,
**characterised in that**
the suction device (30, 32) is held via a tolerance compensation element (36) with an arm (42) of the robot (26) or with the stationary attachment point thereof.

6. The method according to any one of claims 1 to 5,
**characterised in that**
the suction device (30, 32) generates a negative pressure and/or is connected to means for generating a negative pressure.

7. The method according to claim 6,
**characterised in that**
the excess adhesive is guided through a suction hose (32) and/or a suction tube into a collection container which is connected to the suction hose and/or the suction tube.

8. The method according to any one of claims 1 to 7,
**characterised in that**
the adhesive (24) is wetted with an anti-stick agent prior to the adhesive (24) being sucked away and/or whilst it is being sucked away.

9. The method according to claim 8,
**characterised in that**
the anti-stick agent is selected from the group consisting of:
- oils,
- suitable plasticisers,
- oil emulsions in water, fats and/or resins,
- waxes,
- metal soaps,
- fats,
- polymers,
- fluorocarbons,
- powders,
- any mixtures thereof.

10. The method according to either one of claims 8 or 9,
**characterised in that**
the anti-stick agent is introduced directly into the suction device (30, 32).

11. The method according to any one of claims 1 to 10,
**characterised in that**
at least some of the surface of the suction device (30, 32) which comes into contact or can come into contact with the adhesive that has been sucked away is provided with an anti-stick coating.

12. The method according to claim 11,
**characterised in that**
the anti-stick coating contains or consists of Teflon.

13. The method according to any one of claims 1 to 12,
**characterised in that**
the excess adhesive (24) is lifted at least partially from a surface of at least one of the components (10, 12) by means of the guide element.

14. The method according to any one of claims 1 to 13,
**characterised in that**
as the excess adhesive is being sucked away, compressed air is conveyed into the bonding region (14) of the two components (10, 12) by means of a compressed air nozzle (60).

## Revendications

1. Procédé d'enlèvement d'adhésif superflu lors de l'assemblage de deux éléments (10, 12), dans lequel un adhésif (18) est appliqué sur une zone d'assemblage (14) d'au moins un des éléments (10, 12) et les éléments (10, 12) sont assemblés dans la zone d'assemblage (14),
dans lequel,
après l'assemblage, l'adhésif (24) superflu est enlevé au moyen d'un dispositif d'aspiration (30, 32),
**caractérisé en ce que**,
pendant l'aspiration, le dispositif d'aspiration (30, 32) est plaqué avec un élément de guidage (50) au moins par endroits contre au moins l'un des éléments (10, 12).

2. Procédé selon la revendication 1,
**caractérisé en ce que**
l'élément de guidage (50) est un stylet de guidage (50).

3. Procédé selon la revendication 1 ou 2,
**caractérisé en ce que**
le dispositif d'aspiration (30, 32) est mené le long de la zone d'assemblage (14) au moyen d'un robot (26).

4. Procédé selon la revendication 1 ou 2,
**caractérisé en ce que**
les éléments (10, 12) sont menés au moyen d'un robot (26) avec leurs zones d'assemblage (14) le long du dispositif d'aspiration (30, 32) relié de manière stationnaire.

5. Procédé selon la revendication 3 ou 4,
**caractérisé en ce que**
le dispositif d'aspiration (30, 32) est maintenu par le biais d'un élément de compensation de tolérance (36) avec un bras (42) du robot (26) ou avec sa fixation stationnaire.

6. Procédé selon l'une des revendications 1 à 5,
**caractérisé en ce que**
le dispositif d'aspiration (30, 32) génère une dépression et/ou est relié avec des moyens prévus pour générer une dépression.

7. Procédé selon la revendication 6,
**caractérisé en ce que**
l'adhésif superflu est mené à travers un tuyau d'aspiration (32) et/ou à travers un tube d'aspiration dans un récipient de collecte, lequel est relié avec le tuyau d'aspiration et/ou le tube d'aspiration.

8. Procédé selon l'une des revendications 1 à 7,
**caractérisé en ce que**
avant l'aspiration et/ou pendant l'aspiration de l'adhésif (24), l'adhésif (24) est mouillé avec un produit anti-adhérent.

9. Procédé selon la revendication 8,
**caractérisé en ce que**
le produit anti-adhérent est choisi dans le groupe qui est constitué :
- d'huiles
- de plastifiants appropriés,
- d'émulsions d'huiles dans l'eau, de graisses et/ou de résines,
- de cires,
- de savons métalliques,
- de graisses,
- de polymères,
- d'hydrocarbures fluorés,
- de poudres,
- de mélanges quelconques de ceux-ci.

10. Procédé selon l'une des revendications 8 et 9,
**caractérisé en ce que**
le produit anti-adhérent est directement engagé dans le dispositif d'aspiration (30, 32).

11. Procédé selon l'une des revendications 1 à 10,
**caractérisé en ce que**
au moins une partie de la surface du dispositif d'aspiration (30, 32), qui est en contact ou peut entrer en contact avec l'adhésif aspiré, est munie d'un revêtement anti-adhérent.

12. Procédé selon la revendication 11,
**caractérisé en ce que**
le revêtement anti-adhérent contient du Téflon ou en est constitué.

13. Procédé selon l'une des revendications 1 à 12,
**caractérisé en ce que**
l'adhésif (24) superflu est prélevé au moyen de l'élément de guidage au moins partiellement d'une surface d'au moins un des éléments (10, 12).

14. Procédé selon l'une des revendications 1 à 13,
**caractérisé en ce que**
pendant l'aspiration, de l'air sous pression est conduit dans la zone d'assemblage (14) des deux éléments (10, 12) au moyen d'une buse d'air sous pression (60).
